# EUROPEAN PATENT SPECIFICATION

(11) **EP 2 428 712 B1**
(45) Date of publication and mention of the grant of the patent: **07.05.2014**
(21) Application number: 11180641.0
(22) Date of filing: 08.09.2011
(51) Int. Cl.: F16J 13/06, F16J 13/24, B01J 3/03

(54) **A safety device for containers holding fluid under pressure**
Sicherheitsanordnung für unter Druck stehende Behälter
Dispositif de sécurité pour réservoir contenant un fluide sous pression

(30) Priority: 08.09.2010 IT MI20101627
(43) Date of publication of application: 14.03.2012
(73) Proprietor: Ferraresi, Vittorio, 22100 Como (IT)
(72) Inventor: Ferraresi, Vittorio, 22100 Como (IT)
(74) Representative: Lunati & Mazzoni S.r.L.

(56) References cited:
- DE-A1- 3 312 786
- GB-A- 1 253 359
- GB-A- 1 367 860
- US-A- 4 135 640

## Description

The present invention relates to a safety device for containers holding fluid under pressure intended for chemical, pharmaceutical and food plants, in the electronic sector and for water treatment, of the type pointed out in the preamble of the first claim. Similar devices are disclosed in patent applications: US-A-4135640 and GB-A-1367860. In particular, the device is adapted to avoid accidents or other problems resulting from an incorrect procedure in opening a container inside which there is a fluid under pressure and which is equipped with a removable quick-opening closure member.

In detail, the device can apply to a container or apparatus holding fluids which can be utilised in all plants involving use of equipment provided with a removable closure member, in particular industrial plants for producing enamels, paints, chemical and pharmaceutical products, foodstuffs, and intended for production of drinkable water, service or special waters for electronics.

It is known that presently these containers or apparatuses comprise a shell defining an inner volume inside which also suitable members intended for fluid treatment, such as filtering, can be disposed.

The shell is associated with ducts adapted to enable the fluid to enter and come out of said inner volume, and is provided with valves for stopping passage both of the incoming and outgoing fluid.

Finally, said shell consists of at least two elements that can be coupled, by a quick-action closure and opening operation, so as to define the inner volume, and in addition the two elements can be moved relative to each other in such a manner as to provide the operator with quick access to said inner volume for carrying out maintenance operations.

During maintenance, the operator cause working of suitable valves for stopping fluid passage and isolating the container from the rest of the system.

Therefore, part of the fluid under pressure is inside the container and it is therefore indispensable that pressure should be released before opening the container or apparatus. In fact, an incorrect opening would cause a violent escape of the fluid remained inside the apparatus and/or of compressed air, if the apparatus has not been suitably purged during the starting step, and the fluid and/or the compressed air would strike on the operator causing physical damages to him/her.

There is also the possibility that the closure member, generally not permanently fastened to the container's tank, may be projected by the aforesaid compressed-air cushion onto the operator's body.

In addition, toxic gases are often present inside the apparatus and they can cause permanent damages to the operator's health.

The availability of safety means enabling the above mentioned danger situations to be avoided is therefore of the greatest importance.

For this reason, these apparatus are equipped with elements, such as vent members, enabling fluid at the inside of the apparatus to be removed so that they can be opened in a very safe manner.

In these cases the operator, once the fluid flow is stopped, opens the relief valve enabling the liquid and/or gas inside the apparatus to come out, so that pressure inside the fluid-holding apparatus is reduced.

Once pressure reaches the same values as the atmospheric pressure, the operator opens the shell safely and carries out maintenance operations.

The known art mentioned above has some important drawbacks.

In fact, in spite of the presence of safety systems, accidents due to incorrect execution and non-observation of the opening procedures are frequent. Actually, as time goes by, the operator acquires more confidence in his/her capacities and mastery of the machine, which will lead him/her to underestimate the dangers resulting from the machine itself.

Therefore the operator, for negligence, lack of care or too much confidence, does not observe the safety regulations and therefore opens the shell when pressure inside it is still high, which will result in dangers for the operator himself/herself. Finally, the above described dangers are still greater if the apparatus is of the quick-action closure and opening type.

Under this situation, the technical task underlying the present invention is to conceive a safety device for containers holding fluid under pressure provided with quick closure that is able to substantially obviate the mentioned drawbacks. Within the scope of this technical task, it is an important aim of the invention to conceive a device enabling the apparatus holding fluids to be exclusively opened when pressure inside it is the same as the atmospheric pressure.

It is therefore a further aim of the invention to avoid that, due to lack of attention or too much confidence, the operator may not respect the safety regulations.

The technical task mentioned and the aims specified are achieved by a safety device holding fluid under pressure as claimed in the appended Claim 1. Preferred embodiments are highlighted in the sub-claims.

The features and advantages of the invention are hereinafter clarified by the detailed description of preferred embodiments of the invention, with reference to the accompanying drawings, in which:
**Fig. 1** shows a sectional view of a portion of the device according to the invention;
**Fig. 2** is an exploded view of the device portion seen in Fig. 1;
**Fig. 3a** is a sectional view of the device;
**Fig. 3b** shows a larger perspective view of the device in Fig. 3a;
**Fig. 4a** is a sectional view of a further embodiment of the device;
**Fig. 4b** reproduces a perspective view of the device in Fig. 4a; and
**Fig. 5** is a variant of the device of the invention.

With reference to the drawings, the safety device according to the invention for containers holding fluid under pressure intended in particular for chemical and pharmaceutical plants, is generally identified with reference numeral **1.**

In particular, the safety device 1 is adapted to prevent the operator from opening a container **2** when the fluid inside it is under pressure.

Therefore the device enables the rules established by the CE PED 97/23 Directive, addendum **I** art. 2.3 to be unequivocally observed, in which directive it is pointed out that opening of container 2 must be prevented by a mechanism authorising the opening operation only when the residual pressure in the container is the same as the atmospheric pressure.

The safety device 1 is adapted to be preferably used in medium- and small-sized plants intended for treatment of paints, chemical products, foodstuffs, such as chemical and pharmaceutical plants.

In particular, the safety device 1 can be disposed on containers, tanks, filters or other similar elements equipped with a quick-opening system.

Therefore, device 1 can be disposed on containers 2 even when the same are provided with suitable fluid-treatment members. For instance, container 2 can consists of filtering apparatuses and the like.

Container 2 comprises an outer shell made up of at least two units **3** adapted to be coupled with each other in such a manner as to define an inner volume suitable to receive the fluid under pressure.

In addition, container 2 has a preferred extension direction **2a.** Advantageously it is of cylindrical shape with at least one of the two portions in the form of a half-sphere. More specifically, at least the upper portion or cover or closure member is of hemispherical shape, or has a flatter form.

The safety device 1 is adapted to hermetically seal units 3 and to enable pressure of the fluid held in container 2 to be vented and/or released. For this reason it comprises a closing system **4** adapted to obtain said hermetically sealed closure and a vent or relief member **5** adapted to enable the fluid to get out of apparatus 2.

In particular, the closing system 4 defines a closed position in which it combines units 3 together in a fluid-tight manner and an open position at which it allows the operator to mutually move units 3.

The closing system 4 is of the quick-action shut type and in particular it is devoid of bolts for closing container 2 and can be manually operated by the operator without use of particular tools. Therefore, the closing system 4 comprises two sealing elements **6** and at least one locking device **7** adapted to fasten two of said elements 6 to each other causing closure of container 2.

The sealing elements 6 are two in number and have the shape of half a ring so that, once said elements are joined to each other they surround the whole junction region between units 3.

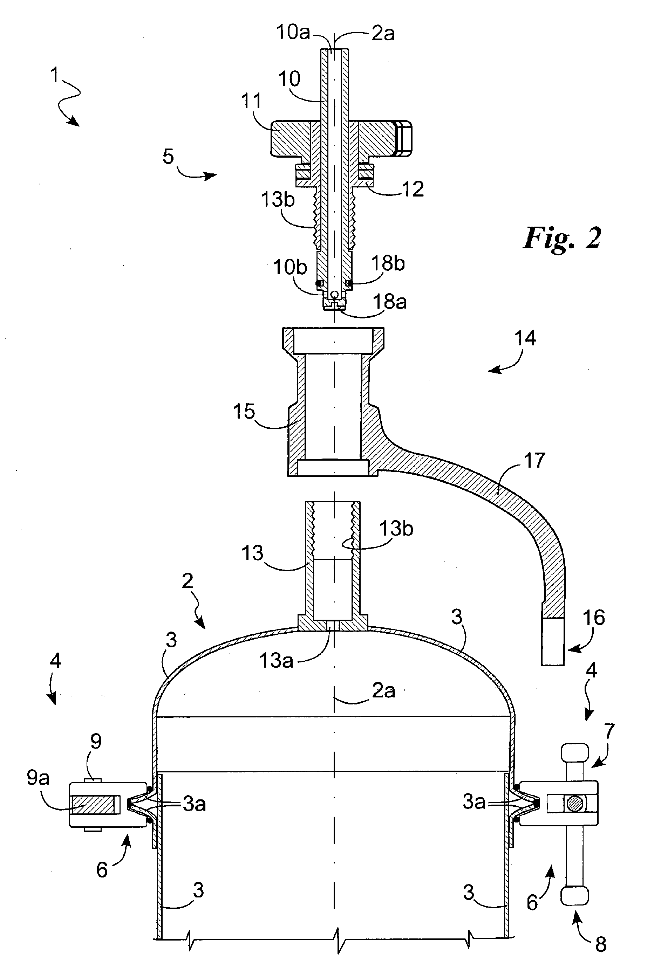

Units 3 in the junction region advantageously have two wings **3a** adapted to come into mutual contact when container 2 is closed and to be surrounded by the sealing elements 6, as shown in Fig. 2. Elements 6 in the contact region with wings 3a have parts of elastomer or other similar material enabling hermetic sealing of the two units 3 to be obtained, once they are under pressure.

In addition, elements 6 in the vicinity of each end have projections **6a** to enable fastening of the elements 6 themselves by the locking device 7.

Device 7 suitably comprises an operating arm **8** adapted to connect and engage two sealing elements 6 with each other and a pin **9** located between projections 6a of an element 6 and adapted to enable the operating arm 8 to rotate relative to said element 6. Preferably, the rotation axis of arm 8 is almost parallel to direction 2a.

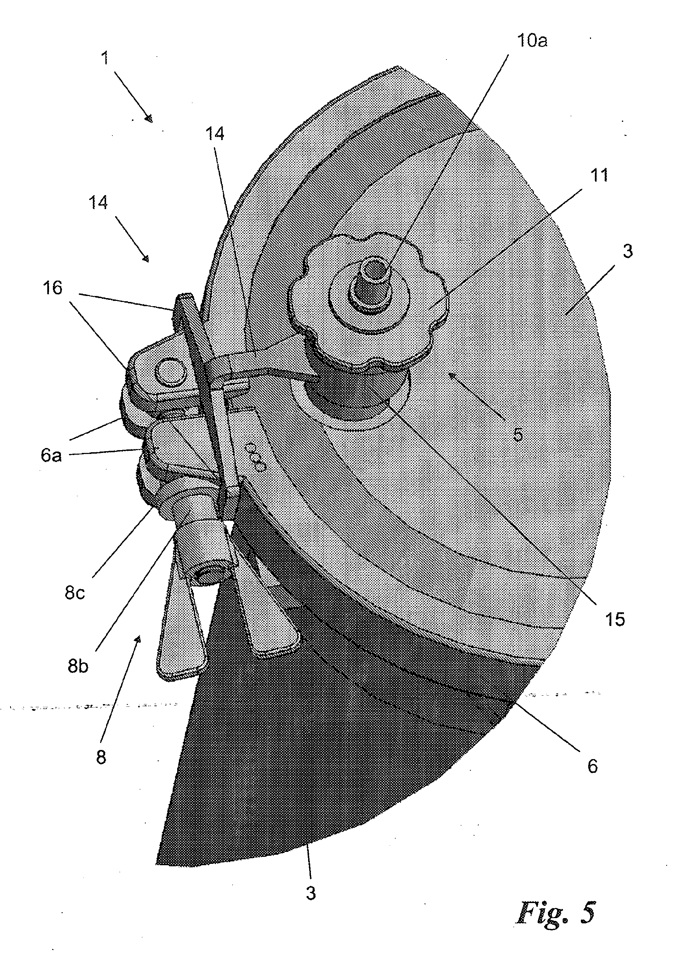

The operating arm 8 comprises components that are suitably connected to each other. Two of said components consist of a pivoting part **8a** secured to pin 9 in a motion-admitting manner and a cylindrical part **8b** adapted to create engagement between the sealing elements 6. Said parts 8a and 8b are further secured to each other by threading, to enable them to move close to and away from each other. The operating arm 8 further preferably comprises at least one flange **8c** (Fig. 5) the central axis of which is parallel to the main axis of arm 8. Flange 8c is preferably in the shape of a ring coaxial with the cylindrical part 8b and having a diameter bigger than that of the cylindrical part 8b. This flange preferably is also adapted to exert pressure against the outer surface of projection 2.

The cylindrical part 8b advantageously has a frustoconical portion placed close to the pivoting element which portion is adapted to be fitted between the projections 6a of a second sealing element 6. In greater detail, due to threading, the cylindrical part 8b is adapted to move close to the pivoting part 8a forcedly fitting the frustoconical portion on projections 6a of the second element 6, thus engaging the two elements 6.

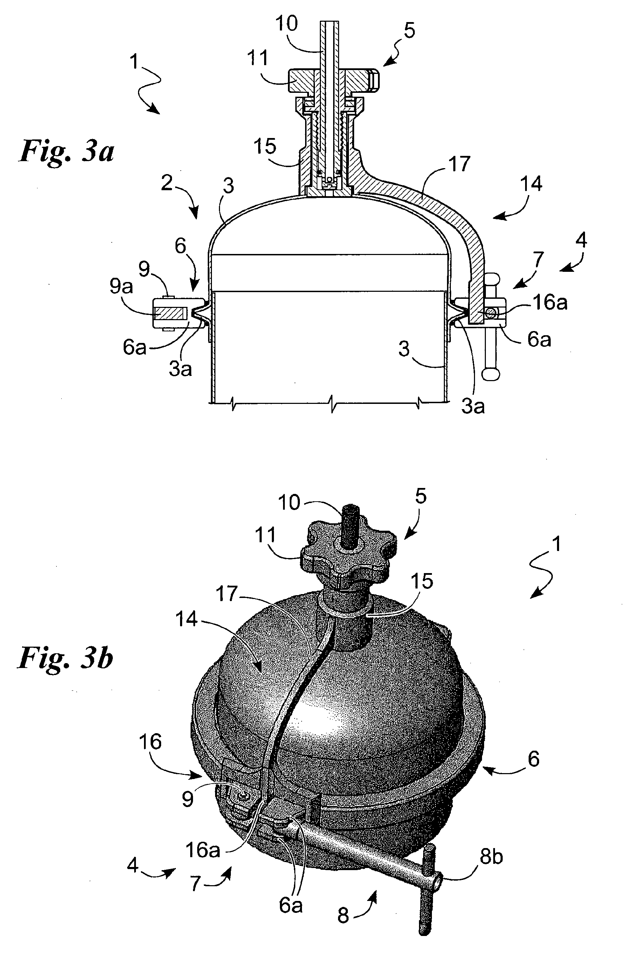

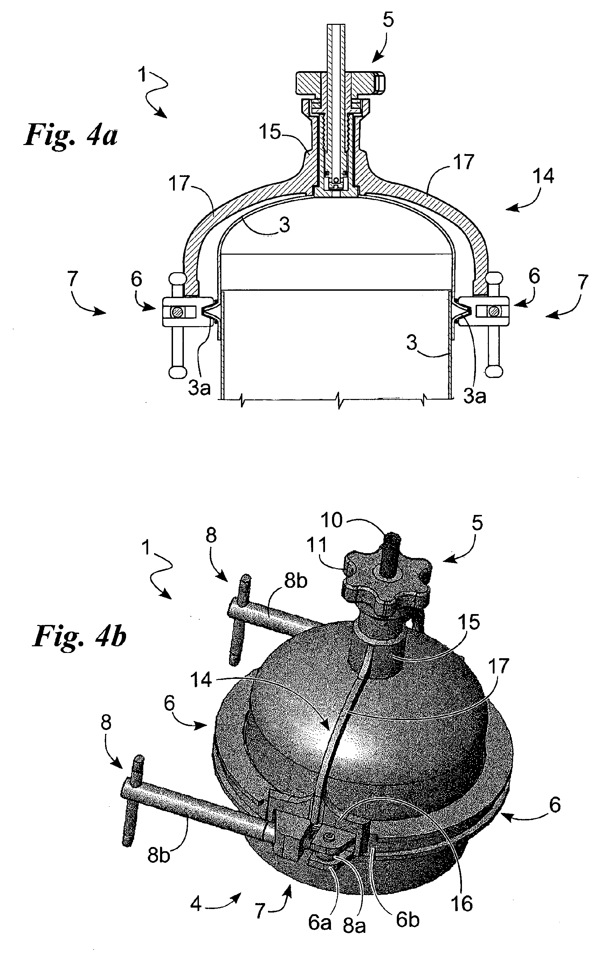

The two sealing elements 6 can finally be provided with two locking devices 7 placed at the contact regions of the ends (see Figs. 3a and 3b) or with a single locking device 7, as shown in Figs. 4a and 4b.

In the last-mentioned case, elements 6 have a plate **9a** at one end, which plate is adapted to fasten elements 6 to each other, while enabling them to carry out a rotation so that they will move close to and away from each other.

The vent member 5 is advantageously disposed on the upper unit 3 and in particular, on top of the spherical cap of the upper base of container 2 which is advantageously provided with a hole enabling fluid escape.

The vent member 5 defines a venting or release position in which the vent member enables escape of fluid under pressure from container 2 and a sealing position in which member 5 prevents escape of said fluid from container 2.

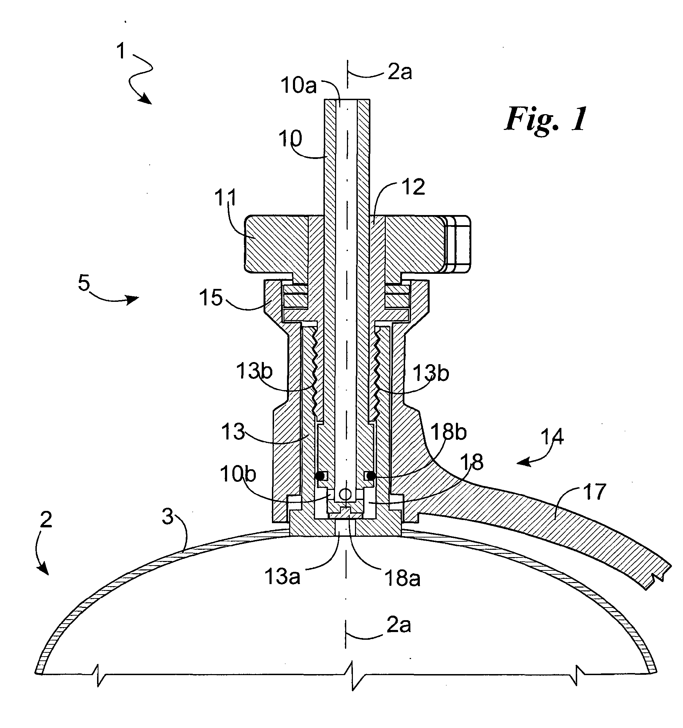

As shown in Fig. 1, it comprises a cylindrical duct **10** enabling escape of the fluid from container 2, an operating block **11** shaped at least partly as a knob, for operating opening and closure of member 5, a junction body **12** for connecting duct 10 to the operating block 11, and a channel **13** adapted to at least partly contain the aforesaid elements. In particular, the cylindrical duct 10, operating block 11 and junction body 12 are mutually fastened by friction fitting or other technical solution adapted to rigidly connect them. Alternatively, the operating block 11 and body 12 are of one piece construction.

In detail, duct 10 has an inner cylindrical cavity **10a** that is blind and the axis of which is substantially coincident with direction 2a, and at least one transverse opening **10b** substantially perpendicular to cavity 10a and enabling said fluid to enter cavity 10a

To this aim, the inner portion of channel 13 is locally spaced apart from the outer surface of duct 10, defining a region **18** for gas passage.

Channel 13 is fastened at the hole present in unit 3 and in turn has a hole **13a** adapted to bring the inside of container 2 into connection for fluid passage with the transverse opening 10b and therefore cavity 10a.

Finally, the vent member 5 is advantageously provided with one or more O-rings **18b** or other sealing elements, preferably made of different elastomeric materials and, if necessary, of PFTE.

In particular, the closed end of duct 10 that is fitted in channel 13 is provided, at hole 13a, with a sealing disc **18a** made of PFTE.

Region 18 is then maintained in a sealed condition by the O-ring 18b placed over the transverse opening 10b and between channel 13 and duct 10 and having an expanded portion substantially in contact with channel 13.

Finally, as shown in Fig. 2, channel 13 has an internally threaded portion **13b** adapted to mesh with a externally threaded respective portion present on the junction body 12, so as to move body 12 in a direction substantially coincident with direction 2a. In detail, this threading enables body 12 to be locked so that the hermetic seal is obtained due to at least one of the sealing elements 18a and 18b, as better described in the following.

In some cases, this threading can have a particular profile so as to increase the sealing action obtained by one or more of said sealing elements.

In particular, threading 13b is of a type not present on the market, so as to prevent tampering or closure by stoppers having a thread of the traditional type and the like. This for the purpose of avoiding both tampering and elimination of the device.

The duct 10, operating block 11 and junction body 12 are advantageously rigidly connected to each other and in particular are of one piece construction. Due to this solution, movement of the junction body 12 and therefore of duct 10 can be controlled through the operating block 11.

In particular, the operating block 11 drives body 12 in rotation, which body, due to threading 13b, moves duct 10 in a direction substantially parallel to the direction 2a.

Device 1 also comprises at least one junction mechanism **14** adapted to operatively connect the vent member 5 to the closing system 4.

In particular, mechanism 14 is adapted to enable opening of the closing system 4 exclusively after opening of member 5, i.e. after the fluid has come out of container 2.

The junction mechanism 14 preferably comprises a sleeve **15** adapted to be externally secured to member 5, at least one friction-fit means **16** placed at a system 4 and adapted to prevent undesirable opening of same, and at least one tailpiece **17** for combining the aforesaid two elements together.

Sleeve 15 is preferably of cylindrical shape the axis of which is almost coincident with that of the duct and is adapted to contain at least part of the vent member 5 and, in greater detail, it is adapted to contain at least part of channel 13.

In addition, advantageously, it has such a shape that it abuts against the operating block 11 or, alternatively, the junction body 12. In particular, sleeve 15 is adapted to abut on the lower face of body 12, as shown in Fig. 1 so that, when the vent member 5 is closed, the junction body 12 inhibits movements of the shell in a direction substantially parallel to direction 2b.

The friction-fit means 16 preferably has a C-shaped conformation so that it surrounds the projections of two elements 6 when system 5 is in the closed position, as shown in Fig. 4b.

In addition, when the operating arm 8 comprises flange 8c (Fig. 5), the friction-fit means 16, in particular one of the arms thereof, is substantially in contact with flange 8c when system 4 is in the closed position. In this way the friction-fit means 16 inhibits opening of the operating arm 8 so as to prevent any even millimetric separation of said two elements 6 when the closing system 4 is in the closed position.

Moreover, the friction-fit means 16, in order to enable a unique positioning on container 2, i.e. prevent incorrect positioning of same, can advantageously be provided with a peg **16a,** shown in Figs. 3a and 3b, adapted to be located between the projections 6a of two adjacent elements 6 when the system is in the closed position 4.

If only one locking member 7 is present, the presence of plate 9a allows the wrong angular positioning of means 16 at the plate itself to be prevented.

Alternatively, said unique positioning possibility can be obtained by means of suitable recesses **6b** made in the vicinity of the projections 6a and adapted to partly receive means 16, as shown in Fig. 4b. In particular, recesses 6b have such a depth that they do not damage the closing system 4 capability of avoiding gas escapes, i.e. their depth does not prevent wings 3a from being devoid of covering, which would enable an undesirable fluid escape.

In fact, both solutions can be simultaneously used, i.e. device 1 can be provided both with recesses 6b and peg 16a.

Finally, tailpiece 17 joins sleeve 15 to the friction-fit means 16 making them integral with each other, i.e. mutually constraining their movements.

Preferably, tailpiece 17, sleeve 15 and friction-fit means 16 can be made as a single component.

The junction mechanism 14 is suitably provided with a number of friction-fit means 16 and tailpieces 17 equal to the number of the locking devices 7.

In particular, if the closing system 4 is provided with two locking devices 7, the mechanism has two friction-fit means 16 and two tailpieces 17.

Operation of the safety device 1 described above as to its structure is the following.

First, container 2 is closed, i.e. units 3 are brought into contact, moving them close to each other in the direction 2a, and are mutually fastened due to the closing system 4.

In greater detail, the sealing elements 6 of the closing system 4 are disposed close to wings 3a, i.e. wings 3a are placed inside them. At this point, using each operating arm 8, the adjacent projections 6a are moved close to each other, in a direction perpendicular to direction 2a, the two sealing elements 6 becoming mutually constrained.

When closure of unit 2 has been completed, the friction-fit means 16 is moved, in the direction 2a too, which means is disposed at the locking device in such a manner as to enclose the projections 6a of two adjacent elements 6 and lock flange 8c. In particular, positioning of means 16 makes it be advantageously interposed between the locking unit and elements 6.

Finally, if peg 16a is present, the latter is placed between said projections 6a, while if the sealing elements 6 are provided with recesses 6b, the friction-fit means 16 is placed inside said recesses.

Due to this movement, sleeve 15 is allowed to be placed at the vent member 5 and more specifically sleeve 15 can be positioned in such a manner that it has part of channel 13 inside it.

At this point the vent member 5 is closed; through the operating block 11 and threading 13b the junction body 12 is lowered so that it seals hole 13a through the sealing disc 18a. Through lowering of the junction body 12 for closure, sleeve 15 too is acted upon and the tailpiece 17 is lowered.

In greater detail, lowering of body 12 causes lowering of duct 10 which will close hole 13a making container 2 hermetically sealed, thereby defining the closed position of the vent member 5. This is ensured by the advantageous presence of seals defined both by said disc 18a and the O-ring 18b placed between duct 10 and channel 13. Seals 18a, 18b are preferably made of elastomer or PFTE. Lowering of body 12 involves lowering of the junction mechanism 14 comprising sleeve 15, tailpiece 17, friction-fit means 16 and the optional peg 16a.

Thus, both movements of the junction mechanism 14 in a direction substantially parallel to direction 2a and any possible mutual moving apart of the sealing elements 6 in a way transverse to direction 2a are locked.

When the described operations have been completed, container 2 is safely closed and ready for use.

When container 2 has to be opened, the safety device 1 compels the operator to carry out the following series of operations: opening of the vent member 5, removal of the friction-fit means 16 and final unlocking of the closing system 4.

In detail, first the vent member 5 is brought to the venting position by virtue of the operating block 11: the operating block 11 is rotated and, due to the presence of threading 13b, it moves upwards together with body 12 and duct 10.

Lifting of duct 10 also causes lifting of the disc-shaped seal 18a and consequent opening of hole 13a. Thus the fluid in container 2 is allowed to outflow.

In detail, said fluid passes through hole 13b, enters duct 10 through the transverse opening 10b, travels over cavity 10a and comes out of container 2. Above all, lifting of the vent member 5 enables sleeve 15 and therefore the junction mechanism 14 to be raised. Raising however does not take place to such an extent as to allow immediate removal of the friction-fit means 16 from its housing and therefore does not enable the operator to open container 2 until unscrewing at the threading 13b has reached a predetermined level.

Therefore the vent member 5 has sufficient time for carrying out an appropriate pressure release in container 2, before the latter can be opened.

Once pressure inside container 2 is substantially equal to the ambient pressure, the fluid flow coming out of the vent member 5 stops and therefore opening of container 2 can take place.

First of all it is necessary to carry out removal of the junction mechanism 14. By suitably rotating the operating block 11, the junction body 12 is fully unscrewed until the end of its stroke, along axis 2a, i.e. until full disengagement of body 12 from threading 13b.

When this operation has been completed, the vent member 5 is removed so that sleeve 15 integral with the junction mechanism 14 is made free.

The mechanism 14 is shifted upwards enabling the friction-fit means 16 to come out of its seat and flange 8c is disengaged. In greater detail, the junction mechanism 14 is shifted in a direction parallel to direction 2a, allowing the friction-fit means 16 to come out of its seat and subsequently the closing system 7 is removed and opening of container 2 can take place.

At the end of this operation, opening of the closing system 4 has occurred. In detail, the operating arm 8 is rotated, as flange 8c is open, and therefore the frustoconical portion is adapted to come out of projections 6a enabling the operating arm to rotate thus releasing the sealing elements 6.

Ultimately, the sealing elements 6 are moved away from units 3 and it is therefore possible to open the holding apparatus.

The invention allows achievement of important advantages.

In fact, device 1 prevents the operator from opening container 2 without having first reduced pressure within the container itself.

Therefore, even if the operator is absent-minded or other troubling factors are present, since he/she must follow the above-described opening procedure, container 2 can only be opened in a safe manner.

In fact, due to the presence of mechanism 14 he/she is obliged to decrease pressure in container 2 through device 5 and only afterwards the closing system can be removed. In addition, a few-millimetre-opening of the two sealing elements 6 or even less is also impossible due to the presence of flange 8a that at the opening would interfere with the friction-fit means 16.

Moreover, provision of peg 16a and recesses 6b allows angular positioning of the locking device exclusively in the correct location. In particular, in case of a single locking device 7, the junction mechanism 14 can be disposed in a unique position also due to the presence of plate 9a.

Due to the particular threading 13b and to the fact that a single mounting position exists, tampering of device 1 and therefore incorrect use of same can be avoided. A further advantage resides in the possibility of starting the plant in a completely safe condition due to the advantageous presence of device 1. In fact, the apparatus is obviously vented before starting.

The invention is susceptible of variations falling within the scope of the appended claims.

## Claims

1. A safety device (1) for containers (2) holding fluid under pressure, each having at least two units (3) to be engaged with each other and defining an inner volume adapted to receive said fluid under pressure, said device comprising: a closing system (4) defining a closed position in which said units (3) are combined together in a fluid-tight manner, and an open position in which they can be mutually moved, and a vent member (5) defining a closed position and a venting position of said fluid under pressure in said container (2), at least one junction mechanism (14) adapted to operatively connect said vent member (5) to said closing system (4), said junction mechanism (14) being suitable to lock said closing system (4) to said closed position when said vent member (5) is in said closed position, said closing system (4) comprises at least two sealing elements (6), adapted to mutually seal two of said units (3), and an operating arm (8) adapted to mutually engage two of said sealing elements (6) **characterised in that** said sealing elements (6) are two in number and have the shape of half a ring so that, once said sealing elements (6) are joined to each other they surround the whole junction region between said units (3).

2. A safety device (1) as claimed in claim 1, wherein said units (3) are combined together in an oblique direction relative to the junction direction of said sealing elements (6).

3. A safety device (1) as claimed in one or more of the preceding claims, wherein said junction mechanism (14) is placed in the closed position in an oblique direction relative to the junction direction of said sealing elements (6).

4. A safety device (1) as claimed in one or more of the preceding claims, wherein said closing system (4) is of the quick-action shut type.

5. A safety device (1) as claimed in one or more of the preceding claims, wherein said junction mechanism (14) comprises a sleeve (15) in the region of said vent member (5), at least one friction-fit means (16) at said closing system (4), and at least one tailpiece (17) adapted to make said sleeve (15) and friction-fit means (16) integral with each other.

6. A safety device (1) as claimed in one or more of the preceding claims, wherein said operating arm (8) comprises at least one flange (8c) having a central axis parallel to the main axis of said arm (8).

7. A safety device (1) as claimed in claim 6, wherein said junction mechanism (14), when said system (4) is in the closed position, is adapted to prevent opening of said operating arm (8).

8. A safety device (1) as claimed in claims 5, 6 and 7, wherein said friction-fit means (16) when said system (4) is in said closed position is substantially in contact with said flange (8c) in a manner adapted to prevent opening of said operating arm (8).

9. A safety device (1) as claimed in the preceding claim, wherein said vent member (5) comprises an operating block (11) adapted to dispose said vent member (5) in said closed position and make said sleeve (15) substantially integral with said container (2) to lock said closing system (4) to said closed position.

10. A safety device (1) as claimed in the preceding claim, wherein said operating block (11) is adapted to operate passage of said vent member (5) to the venting position and to enable movement of said sleeve (15) relative to said container (2) so as to allow said closing system (4) to move to said open position.

11. A safety device (1) as claimed in one or more of the preceding claims, wherein said junction mechanism (14) is provided with one friction-fit means (16) and one tailpiece (17) for each operating arm (8) which the closing system (4) is provided with.

12. A safety device (1) as claimed in claim **11**, wherein the two of said sealing elements (6) contemplate the presence of a recess (6b) formed in the region of said operating arm (8) for receiving said friction-fit means (16) when said vent member (5) is in said closed position and said closing system (4) is in said closed position, in a manner suitable to enable correct angular positioning of said closing system (4).

13. A safety device (1) as claimed in claim 11, wherein at least one of said friction-fit means (16) comprises a peg (16a) adapted to prevent said friction-fit means (16) from taking a wrong positioning, said peg (16a) being suitable to be fitted between said sealing elements (6) when said vent member (5) is in said closed position and said closing system (4) is in said closed position.

14. A safety device (1) as claimed in the preceding claim, wherein two of said sealing elements (6) consecutive to each other and in mutual engagement on rotation, are provided with a junction plate (9a) disposed between them, and wherein said plate (9a) is shaped in such a manner as to prevent insertion of said peg (16).

## Patentansprüche

1. Sicherheitsanordnung (1) für unter Druck stehende Flüssigkeitsbehälter (2), von denen jeder mindestens zwei miteinander verbindbare Einheiten (3) umfasst, die ein Innenvolumen definieren, das geeignet ist, die genannte unter Druck stehende Flüssigkeit aufzunehmen, wobei die Anordnung Folgendes umfasst: ein Schließsystem (4), das eine Schließposition definiert, in der die genannten Einheiten (3) für die Flüssigkeit undurchlässig miteinander verbunden sind, und eine Öffnungsposition, in der sie gegeneinander bewegt werden können, und ein Entlüftungsorgan (5), das eine Schließposition und eine Position zum Entlüften der genannten, in dem genannten Behälter (2) unter Druck stehenden Flüssigkeit definiert, mindestens einen Verbindungsmechanismus (14), der geeignet ist, das genannte Entlüftungsorgan (5) funktionell mit dem genannten Schließsystem (4) zu verbinden, wobei der genannte Verbindungsmechanismus (14) geeignet ist, das genannte Schließsystem (4) in der genannten Schließposition zu blockieren, wenn das genannte Entlüftungsorgan (5) sich in der genannten Schließposition befindet, wobei das genannte Schließsystem (4) mindestens zwei Dichtungselemente (6) umfasst, die geeignet sind, die beiden genannten Einheiten (3) gegeneinander abzudichten und einen Manövrierarm (8), der geeignet ist, die beiden genannten Elemente (6) aneinander zu binden und **dadurch gekennzeichnet ist, dass** die beiden Dichtungselemente (6) zwei sind und vorteilhafterweise eine halbringförmige Form aufweisen, so dass, sobald die Elemente (6) miteinander verbunden sind, diese den gesamten Verbindungsbereich zwischen den Einheiten (3) umgeben.

2. Sicherheitsanordnung (1) nach Anspruch 1, bei der die genannten Einheiten (3) im Verhältnis zur Verbindungsrichtung der genannten Dichtungselemente (6) in Schrägrichtung miteinander verbunden sind.

3. Sicherheitsanordnung (1) nach einem oder mehreren der vorangegangenen Ansprüche, bei der der genannte Verbindungsmechanismus (14) in Schließposition in Schrägrichtung zur Verbindungsrichtung der genannten Dichtungselemente (6) angeordnet ist.

4. Sicherheitsanordnung (1) nach einem oder mehreren der vorangegangenen Ansprüche, bei dem das genannte Schließsystem (4) des Typs mit Schnellverschluss ist.

5. Sicherheitsanordnung (1) nach einem oder mehreren der vorangegangenen Ansprüche, bei der der genannte Verbindungsmechanismus (14) eine Muffe (15) auf dem genannten Entlüftungsorgan (5), mindestens eine Klemmvorrichtung (16) auf dem genannten Schließsystem (4) und mindestens ein Zusatzstück (17) umfasst, das geeignet ist, die genannte Muffe (15) und die genannte Klemmvorrichtung (16) miteinander zu verbinden.

6. Sicherheitsanordnung (1) nach einem oder mehreren der vorangegangenen Ansprüche, bei der der genannte Manövrierarm (8) mindestens einen Flansch (8c) umfasst, dessen Mittelachse parallel zur Hauptachse des genannten Arms (8) verläuft.

7. Sicherheitsanordnung (1) nach Anspruch 6 im genannten Verbindungsmechanismus (14), wenn das genannte System (4) sich in der genannten Schließposition befindet und geeignet ist, das Öffnen des genannten Manövrierarms (8) zu verhindern.

8. Sicherheitsanordnung (1) nach den Ansprüchen 5, 6 und 7, bei der die genannte Klemmvorrichtung (16), wenn das genannte System (4) sich in der genannten Schließposition befindet, im Wesentlichen so im Kontakt mit dem genannten Flansch (8c) ist, dass sie geeignet ist, das Öffnen des genannten Manövrierarms (8) zu verhindern.

9. Sicherheitsanordnung (1) nach dem vorangegangenen Anspruch, bei der das genannte Entlüftungsorgan (5) eine Manövriersperre (11) umfasst, die geeignet ist, das genannte Entlüftungsorgan (5) in die genannte Schließposition zu bringen und die genannte Muffe (15) mit dem genannten Behälter (2) im Wesentlichen zu verbinden, um das genannte Schließsystem (4) in der genannten Schließposition zu blockieren.

10. Sicherheitsanordnung (1) nach dem vorangegangenen Anspruch, bei der die genannte Manöversperre (11) geeignet ist, den Übergang in die Entlüftungsposition des genannten Entlüftungsorgans (5) zu steuern und die Bewegung der genannten Muffe (15) im Verhältnis zum Behälter (2) zu gestatten, um es dem genannten Schließsystem (4) zu gestatten, in die genannte Öffnungsposition zu wechseln.

11. Sicherheitsanordnung (1) nach einem oder mehreren der vorangegangenen Ansprüche, bei der der genannte Verbindungsmechanismus (14) mit einer Klemmvorrichtung (16) und einem Zusatzstück (17) für jeden Manövrierarm (8) ausgestattet ist, den das System umfasst.

12. Sicherheitsanordnung (1) nach Anspruch 11, bei der die beiden genannten Dichtungselemente (6) eine Nische (6b) vorsehen, die auf dem genannten Manövrierarm (8) eingerichtet wird und geeignet ist, die genannte Klemmvorrichtung (16) aufzunehmen, wenn das genannte Entlüftungsorgan (5) sich in der genannten Schließposition befindet und das genannte Schließsystem (4) sich so in der genannten Schließposition befindet, dass die korrekte Winkelpositionierung des genannten Schließsystems (4) gestattet wird.

13. Sicherheitsanordnung (1) nach Anspruch 11, bei der mindestens eine genannte Klemmvorrichtung (16) einen Stift (16a) umfasst, der geeignet ist, eine falsche Positionierung der genannten Klemmvorrichtung (16) zu verhindern, wobei der genannte Stift (16a) geeignet ist, zwischen den genannten Dichtungselementen (6) eingesetzt zu werden, wenn das genannte Entlüftungsorgan (5) sich in der genannten Schließposition befindet und das genannte Schließsystem (4) in der genannten Schließposition.

14. Sicherheitsanordnung (1) nach dem vorangegangenen Anspruch, bei der die beiden Dichtungselemente (6), die nacheinander und gegenseitig an der Drehung beteiligt sind, zwischen sich eine Verbindungsplatte (9a) umfassen und bei der die genannte Verbindungsplatte (9a) so geformt ist, dass sie geeignet ist, das Einsetzen des genannten Stifts (16) zu verhindern.

## Revendications

1. Dispositif de sécurité (1) pour réservoirs (2) contenant un fluide sous pression ayant chacun au moins deux unités (3) à engager l'une dans l'autre et définissant un volume intérieur destiné à accueillir ledit fluide sous pression, ledit dispositif comprenant : un système de fermeture (4) définissant une position de fermeture où lesdites unités (3) sont unies de manière étanche au fluide, et une position d'ouverture où elles sont réciproquement actionnables, et un élément de décharge (5) définissant une position de fermeture et une position de décharge dudit fluide sous pression dans ledit réservoir (2), au moins un mécanisme de jonction (14) destiné à raccorder fonctionnellement ledit élément de décharge (5) audit système de fermeture (4), ledit mécanisme de jonction (14) étant destiné à bloquer dans ladite position de fermeture ledit système de fermeture (4) quand ledit élément de décharge (5) se trouve dans ladite position de fermeture, ledit système de fermeture (4) comprenant au moins deux éléments de scellage (6), destinés à sceller l'une à l'autre les deux unités (3), et un bras de manoeuvre (8) destiné à fixer l'un à l'autre deux desdits éléments (6), **caractérisé par le fait que** lesdits éléments de scellage (6) sont au nombre de deux et qu'ils présentent avantageusement une forme semi-annulaire qui permet, une fois les éléments (6) unis l'un à l'autre, d'envelopper toute la zone de jonction entre les unités (3).

2. Dispositif de sécurité (1) selon la revendication 1, où lesdites unités (3) sont unies en direction oblique par rapport à la direction d'union desdits éléments de scellage (6).

3. Dispositif de sécurité (1) selon une ou plusieurs des revendications précédentes, où ledit mécanisme de jonction (14) est situé en position de fermeture en direction oblique par rapport à la direction d'union desdits éléments de scellage (6).

4. Dispositif de sécurité (1) selon une ou plusieurs des revendications précédentes, où ledit système de fermeture (4) est de type à fermeture rapide.

5. Dispositif de sécurité (1) selon une ou plusieurs des revendications précédentes, où ledit mécanisme de jonction (14) comprend un manchon (15) au niveau dudit élément de décharge (5), au moins un moyen d'encastrement (16) au niveau dudit système de fermeture (4) et au moins un appendice (17) destiné à rendre solidaires l'un à l'autre ledit manchon (15) et ledit moyen d'encastrement (16).

6. Dispositif de sécurité (1) selon une ou plusieurs des revendications précédentes, où ledit bras de manoeuvre (8) comprend au moins une bride 8c ayant un axe central parallèle à l'axe principal dudit bras (8).

7. Dispositif de sécurité (1) selon la revendication 6, où ledit mécanisme de jonction (14), quand ledit système (4) se trouve dans ladite position de fermeture, est destiné à empêcher l'ouverture dudit bras de manoeuvre (8).

8. Dispositif de sécurité (1) selon les revendications 5, 6 et 7, où ledit moyen d'encastrement (16), quand ledit système (4) se trouve dans ladite position de fermeture, est essentiellement au contact de ladite bride (8c) de manière à empêcher l'ouverture dudit bras de manoeuvre (8).

9. Dispositif de sécurité (1) selon la revendication précédente, où ledit élément de décharge (5) comprend un bloc de manoeuvre (11) destiné à disposer ledit élément de décharge (5) dans ladite position de fermeture et à rendre ledit manchon (15) essentiellement solidaire par rapport audit réservoir (2) pour bloquer ledit système de fermeture (4) dans ladite position de fermeture.

10. Dispositif de sécurité (1) selon la revendication précédente, où ledit bloc de manoeuvre (11) est destiné à commander le passage en position de décharge dudit élément de décharge (5) et à permettre le mouvement dudit manchon (15) par rapport audit réservoir (2), de manière à permettre audit système de fermeture (4) de passer dans ladite position d'ouverture.

11. Dispositif de sécurité (1) selon une ou plusieurs des revendications précédentes, où ledit mécanisme de jonction (14) est muni d'un moyen d'encastrement (16) et d'un appendice (17) pour chaque bras de manoeuvre (8) dont le système de fermeture (4) est muni.

12. Dispositif de sécurité (1) selon la revendication 11, où deux desdits éléments de scellage (6) prévoient une niche (6b) réalisée au niveau dudit bras de manoeuvre (8) et destinée à accueillir ledit moyen d'encastrement (16) quand ledit élément de décharge (5) se trouve dans ladite position de fermeture et que ledit système de fermeture (4) se trouve dans ladite position de fermeture, de manière à permettre le positionnement angulaire correct dudit système de fermeture (4).

13. Dispositif de sécurité (1) selon la revendication 11, où au moins un moyen d'encastrement (16) comprend une goupille (16a) destinée à empêcher tout positionnement incorrect dudit moyen d'encastrement (16), ladite goupille (16a) étant destinée à être insérée entre lesdits éléments de scellage (6) quand ledit élément de décharge (5) se trouve dans ladite position de fermeture et que ledit système de fermeture (4) se trouve dans ladite position de fermeture.

14. Dispositif de sécurité (1) selon la revendication précédente, où les deux éléments de scellage susdits (6) consécutifs l'un à l'autre et réciproquement engagés dans la rotation comprennent entre eux une plaquette (9a) de jonction, et où ladite plaquette (9a) est façonnée de manière à empêcher l'introduction de ladite goupille (16).
